# EUROPEAN PATENT APPLICATION

(11) **EP 2 424 014 A2**
(43) Date of publication of application: **29.02.2012**
(21) Application number: 11178238.9
(22) Date of filing: 22.08.2011
(51) Int. Cl.: H01M 4/62, H01M 4/131, H01M 4/13, H01M 4/139

(54) **Electrode for nonaqueous electrolyte secondary battery, nonaqueous electrolyte secondary battery, and method for manufacturing electrode for nonaqueous electrolyte secondary battery**

(30) Priority: 26.08.2010 JP 2010189528; 04.02.2011 JP 2011022834; 15.06.2011 JP 2011133210
(71) Applicant: Sanyo Electric Co., Ltd., Osaka 570-8677 (JP)
(72) Inventor: Ookita, Kazunari, Kobe-city, Hyogo 651-2242 (JP); Sugimori, Masanori, Kobe-city, Hyogo 651-2242 (JP); Kida, Yoshinori, Kobe-city, Hyogo 651-2242 (JP)
(74) Representative: ter Meer, Nicolaus

(57) **Abstract**

The present invention provides an electrode for a nonaqueous electrolyte secondary battery that can sufficiently improve the power output characteristic of the nonaqueous electrolyte secondary battery. The electrode for the nonaqueous electrolyte secondary battery includes a current collector and an active material layer formed on the current collector. The active material layer contains active material particles each coated with a conductive carbon material layer, a surfactant as a dispersant, and conductive carbon material particles.

## Description

### BACKGROUND OF THE INVENTION

### FIELD OF THE INVENTION

This invention relates to electrodes for nonaqueous electrolyte secondary batteries, nonaqueous electrolyte secondary batteries, and methods for manufacturing electrodes for nonaqueous electrolyte secondary batteries.

### DESCRIPTION OF RELATED ARTS

In recent years, lithium secondary batteries capable of achieving size and weight reduction and high capacity have been widely used as power sources for mobile phones and the like. Lithium secondary batteries have more recently been given increasing attention also as batteries for applications requiring high power output, such as electric tools and electric cars. Therefore, increasing the power output of lithium secondary batteries is a significant challenge at the present time.

In order to increase the power output of a lithium secondary battery, it is necessary to improve the electronic conductivity in the active material layer of an electrode. An example of a method capable of improving the electronic conductivity in the active material layer is described in JP-A-2010-86955, in which the surfaces of active material particles are coated with a dispersant, such as an organic dye derivative having an acidic or basic functional group or a triazine derivative having an acidic or basic functional group, and a carbon material.

JP-A-H09-92265 describes that 15% or more of the apparent surface of powdered metallic oxide constituting an active material body is coated to a thickness of 0.01 µm to 0.3 µm with a carbon material having a specific surface area of 150 m²/g or more.

JP-A-2004-103546 describes that positive-electrode active material particles for a lithium secondary battery are manufactured by applying compressive shear stress to a mixture of (A) a lithium-nickel-based composite oxide, (B) activated carbon, and (C) carbon black. The literature also describes a positive electrode containing: the positive-electrode active material particles; an electronic conductor; and a binder.

### SUMMARY OF THE INVENTION

However, even if every one of the techniques described in JP-A-2010-86955, JP-A-H09-92265, and JP-A-2004-103546 is applied, the power output characteristic of the nonaqueous electrolyte secondary battery cannot sufficiently be improved.

The present invention has been made in view of the above problem and, therefore, an object thereof is to provide an electrode for a nonaqueous electrolyte secondary battery that can sufficiently improve the power output characteristic of the nonaqueous electrolyte secondary battery.

An electrode for a nonaqueous electrolyte secondary battery according to the present invention includes a current collector and an active material layer formed on the current collector. The active material layer contains active material particles each coated with a conductive carbon material layer, a surfactant as a dispersant, and conductive carbon material particles.

As just described, in the present invention, not only each active material particle is coated with a conductive carbon material layer but also conductive carbon material particles are further added to and dispersed in the active material layer by a surfactant serving as a dispersant. Therefore, with the use of the electrode for the nonaqueous electrolyte secondary battery according to the present invention, a nonaqueous electrolyte secondary battery can be achieved which has an excellent power output characteristic. Although the reasons for improvement in power output characteristic are not completely clear, a possible reason for this is that the dispersed conductive carbon material particles enter recesses formed in the conductive carbon material layer, whereby the electrical conductivity between the active material particles is further improved to enhance the current collecting efficiency.

For example, if the active material particles are each coated with a conductive carbon material layer but no conductive carbon material particles are added to the active material layer, the electrical conductivity between the active material particles cannot sufficiently be improved. Therefore, in such a case, the power output characteristic cannot sufficiently be improved.

On the other hand, assume that the active material particles have no conductive carbon material layer coated therewith but the active material layer contains conductive carbon material particles. If in this case an attempt is made to contain in the active material layer an amount of conductive carbon material particles necessary to sufficiently improve the power output characteristic, the coatability of slurry for forming the active material layer becomes poor, which makes it difficult to form the active material layer. Therefore, in effect, an active material layer capable of sufficiently improving the power output characteristic cannot be formed.

When the active material particles are each coated with a conductive carbon material layer and the active material layer further contains conductive carbon material particles in accordance with the present invention, the power output characteristic can effectively be improved.

From the viewpoint of more effectively improving the power output characteristic, the conductive carbon material layer and the active material particles are preferably conjugated. One reason for the improvement in this case can be that the electric resistance at the interface between the conductive carbon material layer and the active material particles is reduced to improve the electronic conductivity. Another reason can be that the conductive carbon material particles dispersed by the surfactant enter between the active material particles, whereby the electrical conductivity between the active material particles can be improved.

As used herein, the term "the conductive carbon material layer and the active material particles are conjugated" refers to a state that the active material particles are each coated with a conductive carbon material layer by mechanochemically mixing the conductive carbon material and the active material particles.

In the present invention, the material for the current collector is not particularly limited so long as it has electrical conductivity. The current collector can be formed of a piece of foil made of an electrically conductive metal or alloy. Specifically, if the electrode is a negative electrode, the current collector can be formed of a piece of foil made of Cu or like metal or made of an alloy containing Cu or like metal. On the other hand, if the electrode is a positive electrode, the current collector can be formed of a piece of foil made of Al or like metal or made of an alloy containing Al or like metal. The current collector can have a thickness of about 5 µm to about 30 µm, for example. The thickness of the active material layer formed on the current collector may be about 50 µm to about 200 µm, for example.

In the present invention, the active material particles used are not particularly limited and can be appropriately selected depending on the function desired for the electrode.

When the electrode is a positive electrode, a positive-electrode active material made of, for example, a lithium-containing transition metal composite oxide can be used as active material particles. Specific examples of the lithium-containing transition metal composite oxide include lithium cobaltate, lithium-cobalt-nickel--manganese composite oxides, lithium-aluminum-nickel-manganese composite oxides, lithium-aluminum-nickel-cobalt composite oxides, and lithium-nickel-manganese composite oxides containing no cobalt.

The preferred of these positive-electrode active materials are LiNi_{1/3}CO_{1/3}Mn_{1/3}O₂, lithium-cobalt-nickel-manganese composite oxides represented by the general formula of Li₁₊ₓNiₐMn_{b}Co_{c}O_{2+d} (where x, a, b, c, and d satisfy the conditions of x+a+b+c=1, 0.7≤a+b, 0<x≤0.1, 0≤c/(a+b)<0.35, 0.7≤a/b≤2.0, and -0.1≤d≤0.1), and lithium-nickel-manganese composite oxides containing no cobalt and having a layered structure. The more preferred of the above lithium-cobalt-nickel-manganese composite oxides represented by the general formula of Li₁₊ₓNiₐMn_{b}Co_{c}O₂₊ₐ (where x, a, b, c, and d satisfy the conditions of x+a+b+c=1, 0.7≤a+b, 0<x≤0.1, 0≤c/(a+b)<0.35, 0.7≤a/b≤2.0, and -0.1≤d≤0.1) are lithium-cobalt-nickel-manganese composite oxides containing a smaller cobalt content of 0≤c≤0.2 (for example, c=0.1 or 0.2) and having a layered structure. Lithium-nickel-manganese composite oxides containing no cobalt and having a layered structure are particularly preferably used. The reason for this is that the effects of the present invention can significantly be exhibited.

Although the reasons for this significant effects are not completely clear, a possible reason for this is that if the cobalt content in the lithium-nickel-manganese composite oxide is reduced, the resistance at the interface of the active material particles increases to decrease the electronic conductivity and thereby make the electrochemical reaction at the interface less likely to occur.

On the other hand, when the electrode is a negative electrode, examples of the active material particles that can be used include negative-electrode active material particles made of, for example, molybdenum dioxide, lithium titanate or materials that form an alloy with lithium, such as silicon, germanium or tin.

The conductive carbon material layer coating the active material particles is preferably made of an amorphous carbon. Specific examples of the amorphous carbon include acetylene black and Ketjenblack.

The specific surface area of the conductive carbon material layer is preferably 20 m²/g or more. If the specific surface area of the conductive carbon material layer is too small, the surface of each active material particle may not uniformly be coated with the conductive carbon material layer. On the other hand, if the specific surface area of the conductive carbon material layer is too large, the surface of each active material particle may not suitably be coated with the conductive carbon material layer. Therefore, the specific surface area of the conductive carbon material layer is preferably not larger than 1000 m²/g.

The thickness of the conductive carbon material layer is not particularly limited but is, for example, preferably about 1/10 to about 1/100 of the particle diameter of the active material particles. If the thickness of the conductive carbon material layer is too small, a sufficiently high electrical conductivity may not be achieved. If the thickness of the conductive carbon material layer is too large, lithium ions may be inhibited from being inserted into and extracted from the active material, whereby sufficiently good charge-discharge characteristics may not be achieved.

The conductive carbon material particles are not particularly limited so long as they are made of a conductive carbon material. The conductive carbon material particles may be made of the same kind of conductive carbon material as the conductive carbon material layer or made of a different kind of conductive carbon material. However, the conductive carbon material particles are also preferably made of an amorphous carbon.

The average particle size of the conductive carbon material particles is preferably, for example, about 0.001 to about 0.01 times that of the active material particles. Specifically, the average particle size of the conductive carbon material particles is preferably about 10 nm to about 100 nm. If the average particle size of the conductive carbon material particles is too large, a sufficiently high electrical conductivity may not be achieved. On the other hand, if the average particle size of the conductive carbon material particles is too small, the conductive carbon material particles may aggregate and may not suitably be dispersed.

The specific surface area of the conductive carbon material particles is preferably 20 m²/g or more, more preferably 600 m²/g or more, and still more preferably 700 m²/g or more. Increasing the specific surface area of the conductive carbon material particles in this manner provides a still higher electrical conductivity. The improvement in electrical conductivity provided by increasing the specific surface area of the conductive carbon material particles can be attributed to the fact that the contact area between the electrically conductive particles impregnated with an electrolytic solution and the active material increases to make the reaction therebetween likely to uniformly occur in the electrode. If the specific surface area of the conductive carbon material particles is too small, a sufficiently high electrical conductivity may not be achieved. On the other hand, if the specific surface area of the conductive carbon material particles is too large, the adherence between the active material layer and the current collector may be degraded. Therefore, the specific surface area of the conductive carbon material particles is preferably not larger than 1000 m²/g.

The total content of the conductive carbon material particles and the conductive carbon material layer in the active material layer is preferably 1% to 20% by mass and more preferably 2% to 15% by mass. If the total content of the conductive carbon material particles and the conductive carbon material layer in the active material layer is too large, the content of active material particles in the active material layer becomes too small, which may degrade the power output characteristic. In addition, if the total content of the conductive carbon material particles and the conductive carbon material layer in the active material layer is too large, the adherence between the active material layer and the current collector becomes too low, which may make the active material layer likely to be peeled off or finely divided. On the other hand, if the total content of the conductive carbon material particles and the conductive carbon material layer in the active material layer is too small, the effect of improving the power output characteristic may not sufficiently be achieved.

The ratio of the content of the conductive carbon material layer to the total content of the conductive carbon material particles and the conductive carbon material layer ((conductive carbon material layer)/((conductive carbon material particles) + (conductive carbon material layer))) is, for example, preferably within the range of 0.1 to 1.0 and more preferably within the range of 0.4 to 0.8. If (conductive carbon material layer)/((conductive carbon material particles) + (conductive carbon material layer)) is too large, the electrical conductivity between the active material particles may become too small. On the other hand, if (conductive carbon material layer)/((conductive carbon material particles) + (conductive carbon material layer)) is too small, the electrical conductivity at the surfaces of the active material particles may become too small.

The surfactant has a function as a dispersant for dispersing the conductive carbon material particles. The surfactant may be an ionic surfactant but is preferably a non-ionic surfactant. With the use of a non-ionic surfactant, the conductive carbon material particles can more suitably be dispersed with a small amount of surfactant. Specific examples of the non-ionic surfactant include fatty acid ester-based polymers, such as fatty acid sorbitan ester; higher alcohols, such as polyoxyethylene alkyl ester; and fatty acids, such as fatty acid diethanolamide.

The mass percentage of the surfactant to the conductive carbon material particles is preferably 20% or less and more preferably within the range of 0.01% to 10%. If the amount of surfactant added is too small, the conductive carbon material particles may not suitably be dispersed. On the other hand, if the amount of conductive carbon material particles added is too large, the electrical conductivity may not sufficiently be improved.

In the present invention, the active material layer preferably further contains a dispersion aid in addition to the surfactant as a dispersant. The addition of a dispersion aid to the active material layer further improves the dispersibility of the conductive carbon material particles in the active material layer.

A specific example of such a dispersion aid that can preferably be used is polyvinyl pyrrolidone.

A nonaqueous electrolyte secondary battery according to the present invention includes the electrode for the nonaqueous electrolyte secondary battery according to the present invention. Therefore, the nonaqueous electrolyte secondary battery according to the present invention has an excellent power output characteristic.

In the nonaqueous electrolyte secondary battery according to the present invention, the electrode for the nonaqueous electrolyte secondary battery according to the present invention can suitably be used, for example, as a positive electrode. In this case, the negative electrode can have a negative-electrode active material layer containing as a negative-electrode active material, for example, a carbon material, a metallic or alloy material capable of forming an alloy with lithium, or an oxide of the metallic or alloy material. Specific examples of such a carbon material that can preferably be used include natural graphite, artificial graphite, mesophase pitch-based carbon fibers (MCF), mesocarbon microbeads (MCMB), cokes, hard carbons, fullerenes, and carbon nanotube.

In the nonaqueous electrolyte secondary battery according to the present invention, the type of nonaqueous solvent used in the nonaqueous electrolyte is not particularly limited. Specific examples of such a nonaqueous solvent that can preferably be used include cyclic carbonates, such as ethylene carbonate, propylene carbonate, butylene carbonate, and vinylene carbonate; chain carbonates, such as dimethyl carbonate, methyl ethyl carbonate, and diethyl carbonate; and mixture solvents of one or more of the cyclic carbonates and one or more of the chain carbonates.

Ionic liquids can also preferably be used as a nonaqueous solvent. Preferred examples of cations that can be used in the ionic liquid include pyridinium cations, imidazolium cations, and quaternary ammonium cations. Preferred examples of anions that can be used in the ionic liquid include fluorine-containing imide-based anions. Specific examples of solutes that can be used in the nonaqueous electrolyte include lithium salts containing one or more elements selected from the group consisting of P, B, F, O, S, N, and Cl. Specific examples of the lithium salts include LiPF₆, LiBF₄, LiCF₃SO₃, LiN(CF₃SO₂)₂, LiN(C₂F₅SO₂)₂, LiN(CF₃SO₂) (C₄F₉SO₂), LiC(C₂F₅SO₂)₃, LiAsF₆, and LiClO₄. From the viewpoint of obtaining excellent charge/discharge characteristics and durability, LiPF₆ is a particularly preferred solute to be used.

The separator interposed between the positive and negative electrodes can be composed of, for example, a separator made of polypropylene or polyethylene, or a polypropylene/polyethylene multilayer separator.

A method for manufacturing an electrode for a nonaqueous electrolyte secondary battery according to the present invention relates to a method for manufacturing the electrode for the nonaqueous electrolyte secondary battery according to the present invention. In the method for manufacturing the electrode for the nonaqueous electrolyte secondary battery according to the present invention, the active material layer is formed by adding the active material particles coated with the conductive carbon material layer to a paste containing the conductive carbon material particles previously dispersed therein using the surfactant and then coating the paste on the current collector. In this manner, a nonaqueous electrolyte secondary battery can be manufactured which has a more excellent power output characteristic.

From the viewpoint of providing still more excellent power output characteristic, a dispersion aid is preferably previously added to the paste before the active material particles coated with the conductive carbon material layer are added to the paste. The preparation of the paste can be made, for example, using FILMIX or NEOMIXER both manufactured by PRIMIX Corporation, a homogenizer manufactured by NIHONSEIKI KAISHA LTD. or the like.

The amount of conductive carbon material particles added to the paste is preferably 5% by mass or less. If the amount of conductive carbon material particles added to the paste is too large, the viscosity of the paste is too low, which makes it difficult to form an active material layer with a sufficient thickness.

In the present invention, the process for forming the conductive carbon material layer is not particularly limited. The conductive carbon material layer can be formed, for example, by mechanochemically mixing the conductive carbon material and the active material particles using a dry mixer. Specific examples of the dry mixer include mixers "Nanocular", "Nobilta", and "Mechanofusion" all of which are manufactured by Hosokawa Micron Corporation; and a rotary ball mill, Hybridization System, and Mechanomicros all of which are manufactured by Nara Machinery Co., Ltd.

In accordance with the present invention, an electrode for a nonaqueous electrolyte secondary battery can be provided which can sufficiently improve the power output characteristic of the nonaqueous electrolyte secondary battery.

### BRIEF DESCRIPTION OF THE DRAWINGS

Fig. 1 is a schematic illustration of a three-electrode test cell produced in Examples and Comparative Examples.
Fig. 2 is a scanning electron micrograph of positive-electrode active material particles whose surfaces are coated with acetylene black in Example 1.

### DETAILED DESCRIPTION

Hereinafter, the present invention will be described in more detail with reference to specific examples. However, the present invention is not limited at all by the following examples and can be embodied in various other forms appropriately modified without changing the spirit of the invention.

### EXAMPLES

### Example 1

### [Production of Positive Electrode]

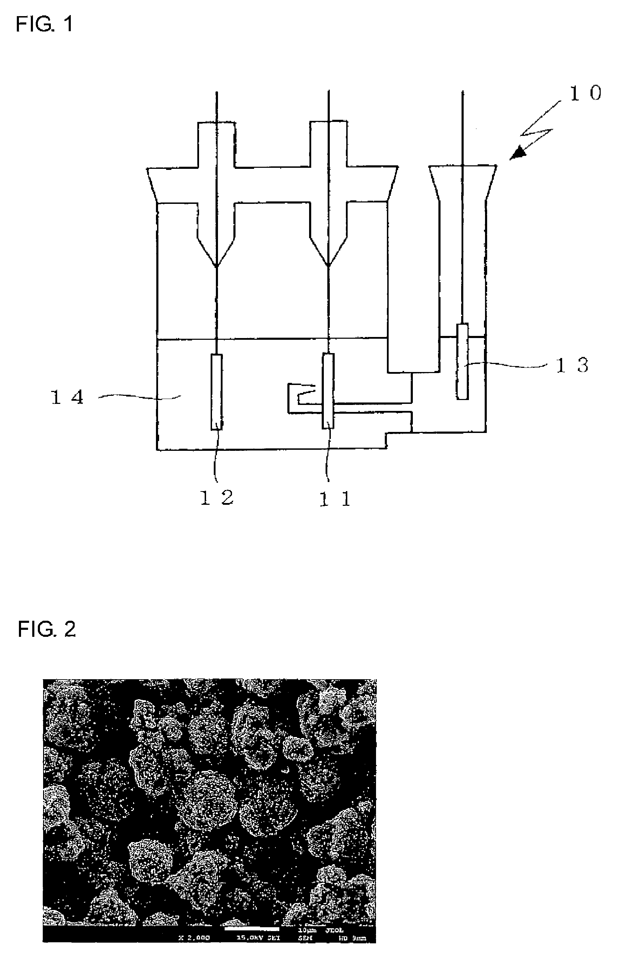

Positive-electrode active material particles (average particle size: 12 µm) represented by the general formula of LiNi_{1/3}Co_{1/3}Mn_{1/3}O₂ and acetylene black (manufactured by DENKI KAGAKU KOGYO KABUSHIKI KAISHA; specific surface area: 40 m²/g , average particle size: 50 nm), which is an amorphous carbon, were mechanochemically mixed by means of a dry mixer Nobilta NOB-130 manufactured by Hosokawa Micron Corporation so that the mass ratio of positive-electrode active material particles to acetylene black was 92:3. Thereafter, the particles thus obtained were observed with a scanning electron microscope (SEM). The SEM photograph shown in Fig. 2 reveals that the surfaces of the positive-electrode active material particles are coated with acetylene black.

Note that in this example the mass ratio of positive-electrode active material particles to conductive carbon material layer was 92:3.

Next, polyglycerol condensed ricinoleic acid ester serving as a non-ionic surfactant was dissolved in a solution in which polyvinyl pyrrolidone (PVP) was dissolved in N-methyl-2-pyrrolidone. Thereafter, acetylene black powder (average particle size: 50 nm), which is an amorphous carbon, was added to the obtained liquid and kneaded using a kneader to produce a paste. Each of PVP and the non-ionic surfactant was added in a proportion of 1.4% by mass relative to acetylene black. The kneading was performed using FILMIX manufactured by PRIMIX Corporation.

Added next to the obtained paste were the positive-electrode active material particles coated with acetylene black and a solution of poly(vinylidene fluoride) in N-methyl-2-pyrrolidone so that the mass ratio of positive-electrode active material particles to conductive carbon material layer to conductive carbon material particles to binder was 92:3:2:3. The mixture was then kneaded to produce a positive electrode slurry.

The positive electrode slurry was coated on a piece of aluminum foil serving as a current collector, dried and then rolled using a rolling roll. Furthermore, a current collector tub was attached to the current collector to complete a positive electrode.

### [Preparation of Nonaqueous Electrolyte]

An amount of 1 mol/L of LiPF₆ serving as a supporting salt was dissolved in a mixture solvent containing ethylene carbonate (EC), methyl ethyl carbonate (MEC), and dimethyl carbonate (DMC) in a volume ratio of 3:3:4 to obtain a nonaqueous electrolyte.

### [Production of Three-Electrode Test Cell]

Next, a three-electrode test cell 10 was produced in which a working electrode 11 formed of the positive electrode produced in the above manner, a counter electrode (negative electrode) 12 made of metal lithium, and a reference electrode 13 made of metal lithium were immersed in the above prepared nonaqueous electrolyte 14.

### Example 2

A three-electrode test cell 10 was produced in the same manner as in Example 1, except that no PVP was added and the amount of non-ionic surfactant added relative to acetylene black was 2.8% by mass.

### Comparative Example 1

A three-electrode test cell 10 was produced in the same manner as in Example 1, except that in the step of coating positive-electrode active material particles with acetylene black, the mass ratio of positive-electrode active material particles to acetylene black was 92:5 and none of conductive carbon material particles, dispersant, and dispersion aid was added.

### Comparative Example 2

A three-electrode test cell 10 was produced in the same manner as in Comparative Example 1, except that in the step of coating positive-electrode active material particles with acetylene black, the mass ratio of positive-electrode active material particles to acetylene black was 92:3.

### Comparative Example 3

In Comparative Example 3, the positive-electrode active material particles were not coated with acetylene black, and acetylene black powder as conductive carbon material particles was added to give a positive-electrode active material particles to acetylene black powder to binder mass ratio of 92:5:3.

In this comparative example, the coatability of the positive electrode slurry was poor and, therefore, a positive electrode could not be produced. Therefore, in this comparative example, a three-electrode test cell 10 could not be produced.

### [Measurement of Rating Capacity of Three-Electrode Test Cell]

Each three-electrode test cell 10 produced in Examples 1 and 2 and Comparative Examples 1 and 2 was charged at a constant current with a current density of 0.2 mA/cm² to 4.3 V (vs. Li/Li⁺) at 25°C and then discharged at a constant current with a current density of 0.2 mA/cm² to 2.5 V (vs. Li/Li+⁾. The discharge capacity of the test cell at this point was measured as a rating capacity of the nonaqueous electrolyte secondary battery.

### [Measurement of Power Output of Three-Electrode Test Cell at SOC of 50%]

Each three-electrode test cell 10 produced in Examples 1 and 2 and Comparative Examples 1 and 2 was charged to a capacity corresponding to 50% of the above measured rating capacity at 25°C and then discharged for 10 seconds at 0.08 mA/cm², 0.4 mA/cm², 0.8 mA/cm², 1.2 mA/cm², 1.6 mA/cm² or 2.4 mA/cm². In each case, the cell voltage after the 10-second discharge was plotted against the current value and the current value at a cell voltage of 2.5 V was calculated as a power output (mW/cm²) at an SOC of 50%. The results are shown in Table 1 below. Note that "Output" at an SOC of 50%, indicated in Table 1, refers to a value relative to the power output of Comparative Example 1 being assumed to be a reference value (100%).

**Table 1**

| | Conductive Carbon Material Laver (Amount of Material Coated) | Conductive Carbon Material Particles (Amount of Material Added) | Dispersant | Output (Relative Value) |
|---|---|---|---|---|
| | | | Dispersion Aid | |
| Ex.1 | Acetylene Black (3% by mass) | Acetylene Back (2% by mass) | Non-ionic Surfactant | 125% |
| | | | PVP | |
| Ex.2 | Acetylene Black (3% by mass) | Acetylene Black (2% by mass) | Non-ionic Surfactant | 110% |
| | | | Not used | |
| Comp. Ex.1 | Acetylene Black (5% by mass) | Not Added | Not used | 100% |
| | | | Not used | |
| Comp. Ex.2 | Acetylene Black (3% by mass) | Not Added | Not used | 4% |
| | | | Not used | |
| Comp Ex.3 | Not coated | Acetylene Black (5% by mass) | Non-ionic Surfactant | Evaluation Impossible |
| | | | Not used | |

As compared to Comparative Examples 1 and 2 in which a conductive carbon material layer was provided without addition of conductive carbon material particles, Example 1, in which a conductive carbon material layer was provided and a non-ionic surfactant serving as a dispersant, polyvinyl pyrrolidone (PVP) serving as a dispersion aid, and conductive carbon material particles were added, and Example 2, in which a non-ionic surfactant serving as a dispersant and conductive carbon material particles were added, exhibited higher power outputs. These results reveal that the provision of a conductive carbon material layer and inclusion of conductive carbon material particles, a surfactant as a dispersant, and optionally a dispersion aid can suitably improve the power output characteristic of the nonaqueous electrolyte secondary battery.

Furthermore, Example 1 containing a dispersion aid exhibited a higher power output than Example 2 containing no dispersion aid. This shows that the addition of a dispersion aid can further improve the power output characteristic.

### Example 3

Positive-electrode active material particles (average particle size: 10 µm) represented by the general formula of ZiNi_{0.6}Mn_{0.4}O₂ and acetylene black (manufactured by DENKI KAGAKU KOGYO KABUSHIKI KAISHA; specific surface area: 40 m²/g, average particle size: 50 nm), which is an amorphous carbon, were mechanochemically mixed by means of a dry mixer Nobilta NOB-130 manufactured by Hosokawa Micron Corporation so that the mass ratio of positive-electrode active material particles to acetylene black was 92:3.

Next, a three-electrode test cell was produced in the same manner as in Example 1, except that no PVP was added and the amount of polyglycerol condensed ricinoleic acid ester as a non-ionic surfactant added relative to acetylene black was 2.8% by mass.

### Example 4

A three-electrode test cell was produced in the same manner as in Example 1, except that amorphous carbon-coated positive-electrode active material particles of the same kind as in Example 3 and Ketjenblack (manufactured by Ketjenblack International Co.; specific surface area: 800 m²/g, average particle size: 39 nm) as conductive carbon material particles were used, no PVP was added and the amount of non-ionic surfactant added relative to Ketjenblack was 2.8% by mass.

### Comparative Example 4

Positive-electrode active material particles (average particle size: 10 µm) represented by the general formula of LiNi_{0.6}Mn_{0.4}O₂ and acetylene black (manufactured by DENKI KAGAKU KOGYO KABUSHIKI KAISHA; specific surface area: 40 m²/g, average particle size: 50 nm), which is an amorphous carbon, were mechanochemically mixed by means of a dry mixer Nobilta NOB-130 manufactured by Hosokawa Micron Corporation so that the mass ratio of positive-electrode active material particles to acetylene black was 92:5.

A three-electrode test cell was produced in the same manner as in Example 1, except that none of conductive carbon material particles, dispersant and dispersion aid was added.

### Comparative Example 5

A positive electrode slurry was produced by adding amorphous carbon-coated positive-electrode active material particles of the same kind as in Example 3 and acetylene black as conductive carbon material particles and performing kneading to give a mass ratio of positive-electrode active material particles to conductive carbon material layer to conductive carbon material particles to binder of 92:3:2:3. Then, a three-electrode test cell was produced in the same manner as in Example 1.

### [Measurement of Power Output of Three-Electrode Test Cell at SOC of 50%]

Each of the three-electrode test cells (Examples 3 and 4 and Comparative Examples 4 and 5) in which LiNi_{0.6}Mn_{0.4}O₂ was used as a positive-electrode active material was measured in terms of power output at an SOC of 50% by the previously-described measurement method. Table 2 below shows the values relative to the power output of Comparative Example 5 being assumed to be a reference value (100%).

**Table 2**

| | Conductive Carbon Material Laver (Amount of Material Coated) | Conductive Carbon Material Particles (Amount of Material Added) | Dispersant | Output (Relative Value) |
|---|---|---|---|---|
| | | | Dispersion Aid | |
| Ex.3 | Acetylene Black (3% by mass) | Acetylene Back (2% by mass) | Non-ionic Surfactant | 107% |
| | | | Not used | |
| Ex.4 | Acetylene Black (3% by mass) | Ketjenblack (2% by mass) | Non-ionic Surfactant | 110% |
| | | | Not used | |
| Comp. Ex.4 | Acetylene Black (5% by mass) | Not Added | Not used | 82% |
| | | | Not used | |
| Comp. Ex.5 | Acetylene Black (3% by mass) | Acetylene Black (2% by mass) | Not used | 100% |
| | | | Not used | |

Comparison between the above results shown in Table 2 and the above results shown in Table 1 reveals that the use of LiNi_{0.6}Mn_{0.4}O₂, which is a nickel-manganese-based composite oxide containing no cobalt, is highly effective in improving the power output.

Furthermore, as compared to Example 3 in which acetylene black having a small specific surface area was used as conductive carbon material particles, Example 4 in which Ketjenblack having a large specific surface area was used as conductive carbon material particles exhibited a larger power output. This shows that the use of conductive carbon material particles of large specific surface area can further improve the power output.

The above results also show that Comparative Example 5, in which conductive carbon material particles (2% by mass) was added to positive-electrode active material particles (3% by mass) coated with a conductive carbon material without use of a dispersant and an dispersion aid, exhibited a larger power output than Comparative Example 4 containing positive-electrode active material particles (5% by mass) coated with a conductive carbon material without addition of conductive carbon material particles, but the power output is poorer than those of Examples 3 and 4 further containing a surfactant as a dispersant or additionally a dispersion aid.

## Claims

1. An electrode for a nonaqueous electrolyte secondary battery, comprising a current collector and an active material layer formed on the current collector, wherein
the active material layer contains active material particles coated with a conductive carbon material layer, a surfactant as a dispersant, and conductive carbon material particles.

2. The electrode for the nonaqueous electrolyte secondary battery according to claim 1, wherein the conductive carbon material layer and the active material particles are conjugated.

3. The electrode for the nonaqueous electrolyte secondary battery according to claim 1 or 2, wherein the conductive carbon material layer is made of an amorphous carbon.

4. The electrode for the nonaqueous electrolyte secondary battery according to any one of claims 1 to 3, wherein the surfactant is a non-ionic surfactant.

5. The electrode for the nonaqueous electrolyte secondary battery according to any one of claims 1 to 4, wherein the active material layer further contains a dispersion aid.

6. The electrode for the nonaqueous electrolyte secondary battery according to claim 5, wherein the dispersion aid is polyvinyl pyrrolidone.

7. The electrode for the nonaqueous electrolyte secondary battery according to any one of claims 1 to 6, wherein the active material particles are made of a lithium-nickel-manganese-based composite oxide having a layered structure.

8. A nonaqueous electrolyte secondary battery comprising the electrode for the nonaqueous electrolyte secondary battery according to any one of claims 1 to 7.

9. A method for manufacturing the electrode for the nonaqueous electrolyte according to any one of claims 1 to 7, wherein
the active material layer is formed by adding the active material particles coated with the conductive carbon material layer to a paste containing the conductive carbon material particles previously dispersed therein using the surfactant and then coating the paste on the current collector.

10. The method for manufacturing the electrode for the nonaqueous electrolyte secondary battery according to claim 9, wherein a dispersion aid is previously added to the paste before the active material particles coated with the conductive carbon material layer are added to the paste.
